# EUROPÄISCHE PATENTSCHRIFT

(11) **EP 2 468 446 B1**
(45) Veröffentlichungstag und Bekanntmachung des Hinweises auf die Patenterteilung: **20.02.2013**
(21) Anmeldenummer: 11190360.5
(22) Anmeldetag: 23.11.2011
(51) Int. Cl.: B23K 26/08, F16P 1/06, F16P 3/00, B23K 26/42

(54) **Sicherheitsabschirmvorrichtung einer Laserschneidanlage**
Safety shielding of a laser cutting machine
Ecran de protection d'une machine de décapage par laser

(30) Priorität: 22.12.2010 DE 202010016854 U
(43) Veröffentlichungstag der Anmeldung: 27.06.2012
(73) Patentinhaber: Hubert, Anton W., 41179 Mönchengladbach (DE)
(72) Erfinder: Hubert, Anton W., 41179 Mönchengladbach (DE)
(74) Vertreter: Albrecht, Ralf

(56) Entgegenhaltungen:
- EP-A1- 0 900 623
- EP-A2- 0 962 278
- WO-A1-2008/051252
- DE-A1- 4 436 944
- US-A1- 2004 104 203
- US-A1- 2008 314 875

## Beschreibung

Die Erfindung betrifft eine Schneidvorrichtung zum Schneiden von Werkstücken mit einem Schneidtisch für die Aufnahme des Werkstücks, mit einer Trageinrichtung, die einen sich oberhalb des Schneidtischs erstreckenden Tragbalken aufweist, der sich über ein Fahrwerk seitlich des Schneidtischs abstützt und der mittels des Fahrwerks quer zur Längsachse des Tragbalkens parallel zur Ebene des Schneidtischs verfahrbar ist, und mit zumindest einem Schneidwagen, der an dem Tragbalken in Richtung dessen Längsachse parallel zur Ebene des Schneidtischs verschieblich geführt ist und an dem ein Schneidgerät zur Erzeugung eines auf den Schneidtisch gerichteten Schneidstrahls angeordnet ist, wobei zur Abdeckung des Schneidstrahls ein Schutzgehäuse vorgesehen ist, das das Schneidgerät allseitig umschließende, hochstehende Seitenwandungen aufweist und zu dem der Schneidwagen relativ bewegbar ist, und wobei das Schutzgehäuse an der Trageinrichtung vorgesehen und mit des Trageinrichtung über den Schneidtisch verfahrbar ist.

Schneidvorrichtungen der vorgenannten Art dienen dazu, Metallplatten mittels eines Schneidstrahls zu schneiden, um eine gewünschte Form der Metallplatte zu erhalten oder ein Werkstückteil mit einer bestimmten Formgebung auszuschneiden. Für die Auflage der Metallplatten ist ein Schneidtisch vorhanden. Der Schneidtisch ist umgeben von einem Vorrichtungsrahmen. Auf den Vorrichtungsrahmen stützt sich eine Trageinrichtung ab, die einen sich oberhalb des Schneidtischs erstreckenden Tragbalken aufweist, der sich einseitig (vgl. DE 297 22 240 U1) oder beidseitig (vgl. DE 298 12 538 U1) an dem Vorrichtungsrahmen mittels eines Fahrwerks abstützt. Die Trageinrichtung - es können auch mehrere davon vorgesehen sein - ist quer zur Längsachse des Tragbalkens parallel zur Ebene des Schneidtischs verfahrbar, so dass im Wesentlichen der gesamte Schneidtisch überstrichen werden kann.

An dem Tragbalken ist ein Schneidwagen in Richtung dessen Längsachse parallel zur Ebene des Schneidtischs ver-schieblich geführt. Es können auch mehrere Schneidwagen vorhanden sein. An jedem Schneidwagen ist jeweils ein Schneidgerät zur Erzeugung eines auf den Schneidtisch gerichteten Schneidstrahls angeordnet. Das Schneidgerät ist höhenverstellbar, um in Anpassung an die Dicke des zu schneidenden Werkstücks einen für den Schneidvorgang optimalen Abstand zwischen Oberfläche des Werkstücks und Unterseite des Schneidgeräts einstellen zu können.

Die Bewegung der Trageinrichtung und des Schneidwagens während des Schneidvorgangs erfolgt mit Hilfe einer Schneidgerätesteuereinrichtung (vgl. DE 298 12 538 U1) nach einem bestimmten Ablaufprogramm automatisch. Hierzu weisen das Fahrwerk der Trageinrichtung und das des Schneidwagens Motoren auf, die mit der Schneidgerätesteuereinrichtung verbunden sind.

Die vorbeschriebenen Schneidvorrichtungen werden nach der Art der Erzeugung des Schneidstrahls unterschieden. Der Schneidstrahl kann als von einem Schneidbrenner erzeugte Brennflamme ausgebildet sein, die mit einem Heizgas, beispielsweise einer Mischung aus Acetylen und Sauerstoff, erzeugt wird. Statt eines Schneidbrenners kommen auch andere Schneidstrahlen in Frage, beispielsweise Plasmaschneidstrahlen oder Wasserstrahlschneidstrahlen.

Durch die Entwicklung hochenergetischer Laser können Metallwerkstücke auch mittels Laserschneidstrahlen geschnitten werden (vgl. DE 20 2004 021 725 U1; DE 10 2008 030 374 A1; DE 10 2008 053 729 A1) . Dabei kommen neben CO₂-Lasern auch sogenannte Faserlaser zum Einsatz. Letztere sind eine spezielle Form von Festkörperlasern, bei denen der dotierte Kern einer Glasfaser das aktive Medium bildet. Aufgrund der großen Länge solcher Glasfasern wird eine hohe Verstärkung erzielt (vgl. Website unter der Domain wikipedia.de, Stichwort "Faserlaser", zugegriffen am 04. November 2010; DE 10 2007 049 436 B4).

Bei Schneidvorrichtungen der vorgenannten Art ist es unabdingbar, einen direkten Blickkontakt zwischen Schneidstrahl und Bedienungsperson zu vermeiden. Dies gilt insbesondere für Brennschneidvorrichtungen mit einer Brennflamme als Schneidstrahl. Der Schutz geschieht meist durch eine den Schneidstrahl eng ummantelnde Schutzabdeckung am Schneidgerät selbst. Dies ist für die vorgenannten Schneidvorrichtungen im Regelfall ausreichend.

Bei Laserschneideinrichtungen, insbesondere solchen, die mit einem Faserlaser ausgerüstet sind, besteht ein erhöhtes Schutzbedürfnis, weil Laserstrahlen von der Oberfläche des zu schneidenden Werkstücks reflektiert werden und die reflektierten Strahlen noch so viel Energie haben, dass Verletzungen insbesondere der Augen der Bedienungsperson auftreten können. Um insoweit sicherzugehen, ist es im Stand der Technik bekannt, solche Schneidvorrichtungen mit einem Schutzgehäuse zu umgeben, das stationär angeordnet ist und dabei den gesamten Vorrichtungsrahmen der Schneidvorrichtung mit hochstehenden Seitenwandungen allseitig umgibt, meist noch ergänzt durch Decken- und Bodenwandungen (vgl. Website unter der Domain wikipedia.de, Stichwort "Laserschneiden", zugegriffen am 04. November 2010). Das Schutzgehäuse fängt auch reflektierte Schneidstrahlkomponenten auf und vermeidet dadurch, dass eine außerhalb des Schutzgehäuses befindliche Bedienungsperson durch den Schneidstrahl bzw. davon reflektierten Strahlanteilen beaufschlagt wird.

Ein solches Schutzgehäuse nimmt zusätzlichen Platz in Anspruch. Außerdem ist es wegen der großen Flächen der Wandungen des Schutzgehäuses kostenaufwendig. Für die Be- und Entladung mit dem zu schneidenden Werkstück müssen Teile des Schutzgehäuses entfernt und anschließend wieder montiert werden. Dies ist nicht nur umständlich, sondern hat auch zur Folge, dass die Schneidvorrichtung währenddessen still steht, d.h. die ohnehin vorhandenen Stillstandzeiten für die Be- und Entladung mit dem Werkstück werden verlängert.

Um dieser Problematik zu begegnen, ist bei einer Schneidvorrichtung, welche aus der EP 0 900 623 A1 bekannt ist, zur Abdeckung des Schneidstrahls ein Schutzgehäuse vorgesehen, welches das Schneidgerät allseitig umschließende, hochstehende Seitenwandungen aufweist. Der Schneidwagen ist innerhalb des Schutzgehäuses relativ zu diesem bewegbar, und das Schutzgehäuse ist an der Trageinrichtung fixiert und mit diesem über den Schneidtisch verfahrbar.

Bei der bekannten Schneideinrichtung ist das Schutzgehäuse doppelwandig und derart ausgebildet, dass Laserleistungen von 3 kW und darüber sowohl bei direktem Auftreten des Laserstrahls auf die Schutzhaube während einer vorgeschriebenen Mindestzeit als auch im normalen Betriebsfall, wenn das Werkstück bearbeitet wird, im Dauerbetrieb sicher abgeschirmt werden kann. Hierdurch gestaltet sich das Schutzgehäuse aufwändig.

Der Erfindung liegt daher die Aufgabe zugrunde, eine Schneidvorrichtung der vorbeschriebenen Art so auszubilden, dass sie kostengünstig herstellbar ist und ein hohes Maß an Sicherheit gewährleistet.

Diese Aufgabe ist erfindungsgemäß dadurch gelöst, dass das Schneidgerät zumindest im Bereich des Austritts des Schneidstrahls von einer Schutzabdeckung umgeben ist, die an dem Schneidgerät befestigt ist.

Die erfindungsgemäße Schneidvorrichtung besitzt also ein Schutzgehäuse, das eine Bedienungsperson vor unmittelbarer oder mittelbarer Einwirkung des Schneidstrahls schützen soll und das an der Trageinrichtung vorgeschen d.h. an ihr befestigt ist, so dass das Schutzgehäuse auf den Bereich der Trageinrichtung reduziert ist und mit dieser über den Schneidtisch verfahren wird. Es hat keinen zusätzlichen Bodenflächenbedarf, so dass die Schneidvorrichtung auch bei beengten Verhältnissen aufgestellt werden kann. Da für das Schutzgehäuse wesentlich geringere Gehäuseflächen erforderlich sind, ist es kostengünstiger herstellbar. Für die Be- und Entladung des zu schneidenden Werkstückes ist eine Demontage von Teilen des Schutzgehäuses nicht erforderlich. Entsprechend kurz sind die Stillstandzeiten einer Schneideinrichtung gemäß der vorliegenden Erfindung.

Eine Schneidvorrichtung der erfindungsgemäßen Art eignet sich für Schneidgeräte mit allen Arten von Schneidstrahlen. Die Erstreckung der Seitenwandungen des Schutzgehäuses können dann den jeweiligen Schutzbedürfnissen und dem Verhalten des Schneidstrahls angepasst werden. Die Schneidvorrichtung eignet sich somit auch für Laserschneidgeräte, und zwar insbesondere für Faserlaserschneidgeräte. Auch bei diesen Geräten ist ein zuverlässiges Auffangen von reflektierten Schneidstrahlanteilen durch entsprechende flächenmäßige Ausdehnungen der Seitenwandungen des Schutzgehäuses möglich.

Die erfindungsgemäße Ausbildung des Schutzgehäuses eignet sich nicht nur für Tragbalken, die an beiden Enden über Tragsäulen an Fahrgestellen des Fahrwerks abgestützt sind, sondern auch für solche, bei denen der Tragbalken nur an einem Ende abgestützt ist (vgl. DE 297 22 240 U1) .

In Ausgestaltung der Erfindung ist vorgesehen, dass die Trageinrichtung derart verfahrbar ist, dass sie zusammen mit dem Schutzgehäuse außerhalb des Bereichs des Schneidtischs bringbar ist. Bei enger Kapselung durch das Schutzgehäuse ist hierfür eine Verlängerung des Vorrichtungsrahmens nicht erforderlich. Da der Schneidtisch in dieser Stellung der Trageinrichtung nach oben hin völlig frei ist, kann er von oben mit dem Werkstück be- und entladen werden, was einfach und schnell durchzuführen ist.

Das Schutzgehäuse sollte sich zumindest im Wesentlichen über die gesamte Länge des Tragbalkens erstrecken, so dass die Verfahrbarkeit des Schneidwagens durch das Schutzgehäuse nicht beeinträchtigt wird, vielmehr der Schneidwagen über die gesamte Länge der Trageinrichtung bewegt werden kann.

Nach einem weiteren Merkmal der Erfindung ist vorgeschlagen, dass das Schutzgehäuse zumindest teilweise relativ zu den Tragbalken zwischen einer abgesenkten Schutzposition und einer angehobenen Montageposition bewegbar geführt ist. Aufgrund dieser Ausbildung zumindest eines Teils des Schutzgehäuses ist ein Zugang zu dem innerhalb des Schutzgehäuses befindlichen Schneidgerät und auch zu den Führungseinrichtungen an dem Tragbalken möglich. Hierdurch wird die Reparatur der von dem Schutzgehäuse abgedeckten Teile selbst für den Fall erleichtert, dass das Schutzgehäuse nach oben hin offen ist. Soweit eine teilweise Anhebung des Schutzgehäuses vorgesehen wird, sollte der bewegliche Teil des Schutzgehäuses dort vorgesehen werden, wo nach Anhebung in die Montageposition eine leichte Zugänglichkeit von häufig auswechselbaren oder häufig zu wartenden Teilen von Schneidgerät, Schneidwagen und Tragbalken gewährleistet sein soll.

Um den Spalt zwischen Unterkante des Schutzgehäuses und jeweils auf dem Schneidtisch befindlichen Werkstück möglich klein zu halten und an die Dicke des Werkstücks anpassen zu können, sollte die Schutzposition in ihrer Höhe einstellbar sein. Es versteht sich, dass zur Bewegung des Schutzgehäuses bzw. dessen beweglichen Teils eine motorische Antriebseinrichtung vorgesehen sein sollte. Als motorische Antriebseinrichtung kommen Elektromotoren, aber auch Hydraulik- und Pneumatikzylinder in Frage.

Das Schutzgehäuse kann eine sich zwischen den Enden des Tragbalkens erstreckende Frontseitenwandung aufweisen, die zumindest teilweise relativ zu dem Tragbalken zwischen einer abgesenkten Schutzposition und einer angehobenen Montageposition bewegbar geführt ist. Soweit das Schneidgerät nicht exakt unterhalb des Tragbalkens angeordnet ist, erstreckt sich die Frontseitenwandung auf der Seite des Tragbalkens, auf der auch das Schneidgerät angeordnet ist. Auf diese Weise wird eine gute Zugänglichkeit des Schneidgeräts erhalten. Die Frontseitenwandung kann mit ihren seitlichen Enden verschieblich an angrenzenden Abschnitten des Schutzgehäuses beweglich geführt sein.

Bei einem weiteren Merkmal der Erfindung ist vorgesehen, dass das Schutzgehäuse im Bereich der Enden des Tragbalkens Endseitenwandungen aufweist, welche frontseitig über eine Frontseitenwandung und rückseitig über eine Rückseitenwandung verbunden sind. Auf diese Weise ergibt sich eine kompakte Ummantelung des Bereichs von Tragbalken, Schneidwagen und Schneidgerät.

Um reflektierte Strahlenanteile gut auffangen zu können, sollte zumindest die Frontseitenwandung einen unteren Wandabschnitt aufweisen, der sich nach oben zunächst schräg von dem Tragbalken weg erstreckt, und sollte sich an diesen unteren Wandabschnitt ein oberer Wandabschnitt anschließen, der sich in entgegengesetzter Richtung schräg nach oben erstreckt. Eine spiegelbildliche Ausbildung kann dann für die Rückseitenwandung vorgesehen sein.

Soweit es die Endseitenwandung betrifft, können sie Teil der Tragsäulen sein, auf denen sich der Tragbalken abstützt. Untenseitig können die Endseitenwandungen in Abdeckleisten auslaufen, die Schienen für das Fahrwerk teilweise umgreifen.

In der Zeichnung ist die Erfindung anhand eines Ausführungsbeispiels näher veranschaulicht. Es zeigen:
- Figur 1: eine Ansicht der erfindungsgemäßen Schneidvorrichtung schräg von oben;
- Figur 2: dieselbe Ansicht wie gemäß Figur 1 mit angehobener Frontseitenwandung des Schutzgehäuses und
- Figu 3: eine Detailansicht der Schneidvorrichtung gemäß den Figuren 1 und 2 bei angehobener Frontseitenwandung und aufgeklappter Schutzabdeckung des Schneidgeräts.

Die in den Figuren dargestellte Schneidvorrichtung 1 weist einen Vorrichtungsrahmen 2 auf, der aus einem unteren Rahmenteil 3 und einem oberen, auf den unteren Rahmenteil 3 aufgesetzten Rahmenteil 4 besteht. Der untere Rahmenteil 3 hat zwei parallel zueinander und horizontal verlaufende Längsträger 5, 6, an deren Enden und in deren Mitten jeweils ein Fußblock 8 bis 12 angeordnet ist. Über die Fußblöcke 8 bis 12 ruht der Vorrichtungsrahmen 2 auf einem hier nicht näher dargestellten Boden. Die Fußblöcke 8, 10 an den vorderen Enden und die Fußblöcke 9, 12 an den hinteren Enden der Längsträger 5, 6 sind über Querstreben 13, 14 verbunden.

Das obere Rahmenteil 4 hat ebenfalls zwei Längsträger 15, 16, die parallel zueinander und horizontal oberhalb der Längsträger 5, 6 des unteren Rahmenteils 3 verlaufen und sich auf diesen abstützen. Die Enden der Längsträger 15, 16 des oberen Rahmenteils 4 sind gleichfalls über Querstreben 17, 18 verbunden.

Innerhalb des von dem Vorrichtungsrahmen 2 eingeschlossenen Raums ist im vorderen Bereich der Schneidvorrichtung 1 ein rechteckiger Schneidtisch 19 ortsfest angeordnet. Er ruht auf einem Tragbock 20. Seine Oberseite wird von einem Tischrost 21 gebildet, dessen Oberseite sich horizontal erstreckt. Auf dem Schneidtisch 19 können zu schneidende Werkstücke, beispielsweise Platten oder dergleichen, aufgelegt und - falls nötig - fixiert werden.

Auf dem oberen Rahmenteil 4 aufgesetzt ist eine Trageinrichtung 22, die eine sich horizontal und parallel zu den Querstreben 13, 14 bzw. 17, 18 erstreckenden Tragbalken 23 aufweist, an dessen Enden plattenförmige Tragstützen 24, 25 angreifen, die untenseitig hier nicht näher dargestellte Fahrgestelle 26 aufweisen. Die Fahrgestelle 26 stützen sich über Schienen an den Längsträgern 15, 16 ab, so dass die Trageinrichtung 22, d.h. der Tragbalken 23 und die Tragstützen 24, 25, längs der Längsträger 15, 16, d.h. quer zur Längserstreckung des Tragbalkens 23 verfahrbar sind.

Der Antrieb des Fahrwerks geschieht beidseitig über Linearmotoren. Hierzu sind in den Außenseiten der oberen Längsträger 15, 16 jeweils zwei übereinander angeordnete Magnetreihen 27, 28 vorgesehen, die sich längs der Längsträger 15, 16 erstrecken und zwischen die ein hier nicht näher dargestellter Linearmotorschuh eingreift. Durch entsprechende Aktivierung kann die Trageinrichtung 22 in Richtung der Längsträger 15, 16 bewegt werden.

Die Trageinrichtung 22 ist von einem Schutzgehäuse 29 umgeben. Das Schutzgehäuse 29 hat eine Frontseitenwandung 30 und eine Rückseitenwandung 31. Beide erstrecken sich über die gesamte Länge des Tragbalkens 23. Sie haben untere Wandungsabschnitte 32 bzw. 33, die sich von ihren Unterkanten schräg nach oben erstrecken und sich dabei von dem Tragbalken 23 entfernen. An diese unteren Wandungsabschnitte 32, 33 schließen sich obere Wandungsabschnitte 34 bzw. 35 an, die schräg nach oben verlaufen und sich dabei dem Tragbalken 23 annähern, also in umgekehrter Richtung schräg verlaufen. Wiederum daran schließen sich obenseitig horizontale Wandungsabschnitte 36 bzw. 37 an. Oben- und untenseitig ist das Schutzgehäuse 29 offen.

An den Tragstützen 24, 25 sind Endseitenwandungen 38, 39 befestigt. An deren Unterseiten sind Abdeckleisten 40, 41 angebracht, die die äußeren oberen Kanten der Längsträger 15, 16 umgreifen, so dass dort keine abgelenkten Schneidstrahlanteile austreten können.

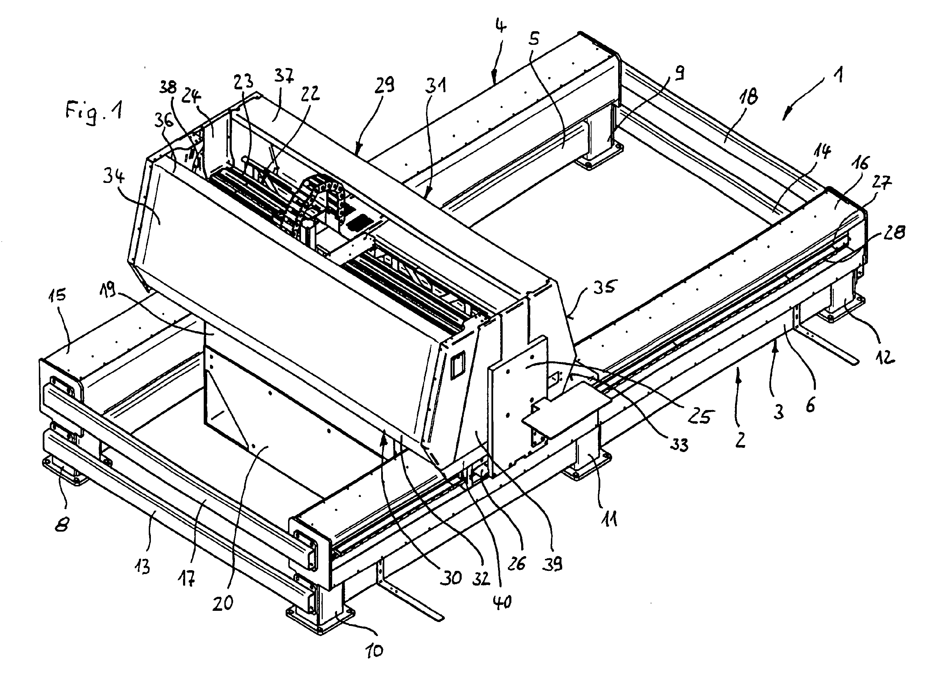

In der Darstellung gemäß Figur 1 befindet sich die Frontseitenwandung 30 in der unteren Schutzposition. Diese Schutzposition wird im Betrieb so eingestellt, dass sich die Unterkante der Frontseitenwandung 30 mit möglichst geringem Abstand oberhalb der Oberseite des auf dem Schneidtisch 19 befindlichen Werkstücks befindet. Die Schutzposition kann also an die jeweilige Dicke des Werkstücks entsprechend angepasst werden.

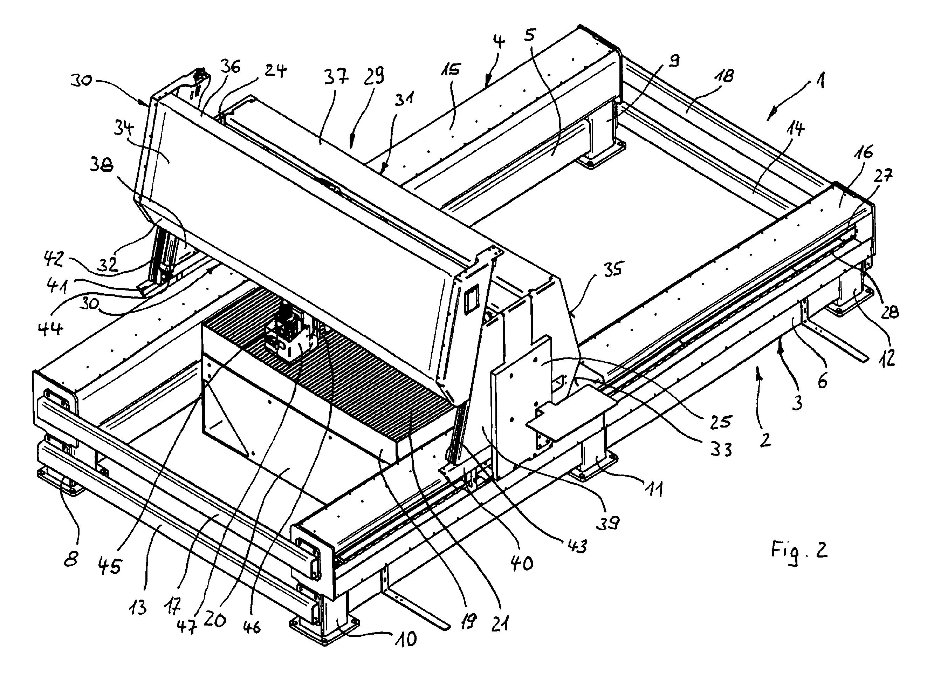

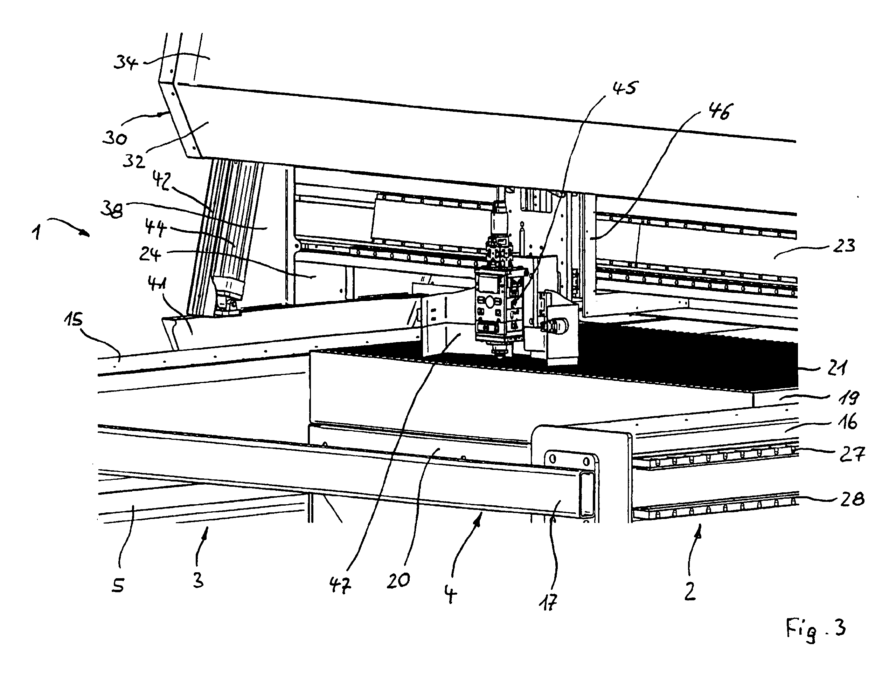

An den Vorderkanten der Endseitenwandungen 38, 39 ist die Frontseitenwandung 30 über Schienen 42, 43 vertikal und schräg verschieblich geführt. In den Darstellungen gemäß den Figuren 2 und 3 ist die Frontseitenwandung 30 mit Hilfe von parallel und innenseitig neben den Schienen 42, 43 angeordneten Pneumatikzylinder 44 aus der Schutzposition in eine Montageposition angehoben gezeigt. In dieser Position ist ein Schneidgerät 45 freigelegt, das als Faserlaserschneidgerät ausgebildet ist. Das Schneidgerät 45 ist an einem Schneidwagen 46 vertikal verschieblich gelagert. Dieser ist wiederum an dem Tragbalken 23 horizontal in dessen Längsrichtung mit Hilfe eines entsprechenden Antriebsmotors verfahrbar. Aufgrund der vertikalen Verfahrbarkeit des Schneidgeräts 45 kann dessen Abstand zur Oberfläche des auf dem Schneidtisch 19 befindlichen Werkstückes entsprechend dessen Dicke jeweils optimal eingestellt werden. Bei angehobener Stellung der Frontseitenwandung 30 sind die wesentlichen Teile des Schneidgeräts 45 und des Schneidwagens 46 gut erreichbar.

Das Schneidgerät 45 ist in der Darstellung gemäß Figur 2 von einer Schutzabdeckung 47 umgeben, deren Unterkante in einer Ebene liegt, die bei entsprechender Vertikalstellung des Schneidgerätes 45 möglichst nahe an der Oberseite des auf dem Schneidtisch 19 befindlichen Werkstücks liegt. Die Schutzabdeckung 47 kann - wie aus Figur 3 zu ersehen ist - aufgeklappt werden, so dass das Schneidgerät 45 für Reparatur- und Einstellarbeiten gut zugänglich gemacht werden kann.

Da das Schutzgehäuse 29 fest mit der Trageinrichtung 22 verbunden ist, wird es mit dieser Trageinrichtung 22 bewegt, wenn diese längs der Längsträger 15, 16 verfahren wird. Für die Be- und Entladung des Schneidtischs 19 mit einem Werkstück wird die Einheit aus Trageinrichtung 22 und Schutzgehäuse 29 in den hinteren (rechten) Bereich ver- fahren, so dass dann der Schneidtisch 19 völlig freiliegt und einfach mit einem Werkstück vertikal be- oder entladen werden kann.

## Patentansprüche

1. Schneidvorrichtung (1) zum Schneiden von Werkstücken mit einem Schneidtisch (19) für die Auflage des Werkstücks, mit einer Trageinrichtung (22), die einen sich oberhalb des Schneidtischs (19) erstreckenden Tragbalken (23) aufweist, der sich über ein Fahrwerk seitlich des Schneidtischs (19) abstützt und der mittels des Fahrwerks quer zur Längsachse des Tragbalkens (23) parallel zur Ebene des Schneidtischs (19) verfahrbar ist, und mit zumindest einem Schneidwagen (46), der an dem Tragbalken (23) in Richtung dessen Längsachse parallel zur Ebene des Schneidtischs (19) verschieblich geführt ist und an dem ein Schneidgerät (45) zur Erzeugung eines auf den Schneidtisch (19) gerichteten Schneidstrahls angeordnet ist, wobei zur Abdeckung des Schneidstrahls ein Schutzgehäuse (29) vorgesehen ist, das das Schneidgerät (45) allseitig umschließende, hochstehende Seitenwandungen (30, 31, 38, 39) aufweist und zu dem der Schneidwagen (46) relativ bewegbar ist, und wobei das Schutzgehäuse (29) an der Trageinrichtung (22) vorgesehen und mit der Trageinrichtung (22) über den Schneidtisch (19) verfahrbar ist, **dadurch gekennzeichnet, dass** das Schneidgerät (45) zumindest im Bereich des Austritts des Schneidstrahls von einer Schutzabdeckung (47) umgeben ist, die an dem Schneidgerät (45) befestigt ist.

2. Schneidvorrichtung nach Anspruch 1, **dadurch gekennzeichnet, dass** das Schneidgerät (45) als Laserschneidgerät, insbesondere als Faserlaserschneidgerät ausgebildet ist.

3. Schneidvorrrichtung nach Anspruch 1 oder 2, **dadurch gekennzeichnet, dass** die Trageinrichtung (22) derart verfahrbar ist, dass sie zusammen mit dem Schutzgehäuse (29) in eine Position außerhalb des Bereichs des Schneidtischs (19) bringbar ist.

4. Schneidvorrichtung nach Anspruch 1 bis 3, **dadurch gekennzeichnet, dass** sich der Tragbalken (23) an beiden Enden über Tragsäulen (24, 25) an Fahrgestellen (26) des Fahrwerks abstützt.

5. Schneidvorrichtung nach einem der Ansprüche 1 bis 4, **dadurch gekennzeichnet, dass** sich das Schutzgehäuse (29) zumindest im Wesentlichen über die gesamte Länge des Tragbalkens (23) erstreckt.

6. Schneidvorrichtung nach einem der Ansprüche 1 bis 5, **dadurch gekennzeichnet, dass** das Schutzgehäuse (29) zumindest teilweise relativ zu dem Tragbalken (23) zwischen einer abgesenkten Schutzposition und einer angehobenen Montageposition bewegbar geführt ist.

7. Schneidvorrichtung nach Anspruch 6, **dadurch gekennzeichnet, dass** die Schutzposition in ihrer Höhe einstellbar ist.

8. Schneidvorrichtung nach Anspruch 6 oder 7, **dadurch gekennzeichnet, dass** zur Bewegung des Schutzgehäuses (29) bzw. dessen beweglichen Teils (30) eine motorische Antriebseinrichtung (44) vorgesehen ist.

9. Schneidvorrichtung nach einem der Ansprüche 1 bis 8, **dadurch gekennzeichnet, dass** das Schutzgehäuse (29) eine sich zwischen den Enden des Tragbalkens (23) erstreckende Frontseitenwandung (30) aufweist, die zumindest teilweise relativ zu dem Tragbalken (23) zwischen einer abgesenkten Schutzposition und einer angehobenen Montageposition bewegbar geführt ist.

10. Schneidvorrichtung nach Anspruch 9, **dadurch gekennzeichnet, dass** die Frontseitenwandung (30) mit ihren seitlichen Enden verschieblich an angrenzenden Abschnitten des Schutzgehäuses (29) geführt ist.

11. Schneidvorrichtung nach einem der Ansprüche 1 bis 10, **dadurch gekennzeichnet, dass** das Schutzgehäuse (29) im Bereich der Enden des Tragbalkens (23) Endseitenwandungen (38, 39) aufweist, welche frontseitig über eine Frontseitenwandung (30) und rückseitig über eine Rückseitenwandung (31) verbunden sind.

12. Schneidvorrichtung nach Anspruch 8 oder 11, **dadurch gekennzeichnet, dass** zumindest die Frontseitenwandung (30) einen unteren Wandabschnitt (32) aufweist, der sich nach oben zunächst schräg von dem Tragbalken (23) weg erstreckt, und dass sich an diesen unteren Wandabschnitt (32) ein oberer Wandabschnitt (34) anschließt, der sich in entgegengesetzter Richtung schräg nach oben erstreckt.

13. Schneidvorrichtung nach Anspruch 11 oder 12, **dadurch gekennzeichnet, dass** Teile der Endseitenwandungen (38, 39) Tragsäulen (24, 25) sind, auf der bzw. denen sich der Tragbalken (23) abstützt.

14. Schneidvorrichtung nach einem der Ansprüche 11 bis 13, **dadurch gekennzeichnet, dass** die Endseitenwandung (38, 39) untenseitig in Abdeckleisten (40, 41) auslaufen.

15. Schneidvorrichtung nach einem der vorherigen Ansprüche, **dadurch gekennzeichnet, dass** die Schutzabdeckung (47) öffenbar ist.

## Claims

1. A cutting apparatus (1) for cutting workpieces comprising a cutting table (19) for placing the workpiece thereon, comprising a carrying device (22) which has a carrying bar (23) extending above the cutting table (19) and which is supported by an undercarriage to the side of the cutting table (19) and which can be moved by the undercarriage transversely to the longitudinal axis of the carrying bar (23) parallel to the plane of the cutting table (19), and comprising at least one cutting carriage (46) which is guided displaceably on the carrying bar (23) in the direction of the longitudinal axis of the latter parallel to the plane of the cutting table (19) and on which there is provided a cutting device (45) for generating a cutting beam directed at the cutting table (19), wherein a protective housing (29) is provided to cover the cutting beam that has upright standing side walls (30, 31, 38, 39) enclosing the cutting device (45) on all sides and relative to which the cutting carriage (46) can be moved, and wherein the protective housing (29) is provided on the carrying device (22) and can be moved over the cutting table (19) with the carrying device (22), **characterised in that** the cutting device (45) is surrounded, at least in the region of the outlet for the cutting beam, by a protective cover (47) which is attached to the cutting device (45).

2. The cutting apparatus according to Claim 1, **characterised in that** the cutting device (45) is in the form of a laser cutting device, in particular a fibre laser cutting device.

3. The cutting apparatus according to Claim 1 or 2, **characterised in that** the carrying device (22) can be moved such that it can be brought together with the protective housing (29) into a position outside of the region of the cutting table (19).

4. The cutting apparatus according to any of Claims 1 to 3, **characterised in that** the carrying bar (23) is supported at both ends by carrying columns (24, 25) on carriers (26) of the undercarriage.

5. The cutting apparatus according to any of Claims 1 to 4, **characterised in that** the protective housing (29) extends at least essentially over the whole length of the carrying bar (23).

6. The cutting apparatus according to any of Claims 1 to 5, **characterised in that** the protective housing (29) is guided moveably at least partially relative to the carrying bar (23) between a lowered protective position and a raised fitting position.

7. The cutting apparatus according to Claim 6, **characterised in that** the protective position is height-adjustable.

8. The cutting apparatus according to Claim 6 or 7, **characterised in that** a motorised drive device (44) is provided in order to move the protective housing (29) and the moveable part (30) of the latter.

9. The cutting apparatus according to any of Claims 1 to 8, **characterised in that** the protective housing (29) has a front side wall (30) extending between the ends of the carrying bar (23) and which is guided moveably at least partially relative to the carrying bar (23) between a lowered protective position and a raised fitting position.

10. The cutting apparatus according to Claim 9, **characterised in that** the front side wall (30) is guided displaceably (30) with its side ends on adjacent sections of the protective housing (29).

11. The cutting apparatus according to any of Claims 1 to 10, **characterised in that** the protective housing (29) has in the region of the ends of the carrying bar (23) end side walls (38, 39) which are connected on the front side by a front side wall (30) and on the rear side by a rear side wall (31).

12. The cutting apparatus according to Claim 8 or 11, **characterised in that** at least the front side wall (30) has a lower wall section (32) which extends upwards, initially at an angle, away from the carrying bar (23), and that there is adjoining this lower wall section (32) an upper wall section (34) which extends upwards in the opposite direction at an angle.

13. The cutting apparatus according to Claim 11 or 12, **characterised in that** parts of the end side walls (38, 39) are carrying columns (24, 25) on which the carrying bar (23) is supported.

14. The cutting apparatus according to any of Claims 11 to 13, **characterised in that** the end side wall (38, 39) runs in covering strips (40, 41). on the lower side.

15. The cutting apparatus according to any preceding Claim, **characterised in that** the protective cover (47) can be opened.

## Revendications

1. Appareil de découpage (1) pour découper des pièces de travail avec une table de découpe (19) sur laquelle est posée la pièce de travail, avec un dispositif de support (22) doté d'une barre de support (23) qui s'étend au-dessus de la table de découpe (19), supportée par un châssis sur le côté de la table de découpage (19), et qui peut être déplacée au moyen du châssis en travers de l'axe longitudinal de la barre de support (23), parallèlement au plan de la table de découpe (19), et avec au moins un chariot de coupe (46) monté coulissant sur la barre de support (23) en direction de l'axe longitudinal de cette dernière, parallèlement au plan de la table de découpe (19), et qui est disposé sur l'appareil de découpage (45) en vue de produire un jet de découpe orienté vers la table de découpe (19), où un boîtier de protection (29), par rapport auquel le chariot de découpe (46) peut être déplacé, sert à recouvrir le jet de découpe et est doté de parois latérales (30, 31, 38, 39) élevée qui entourent l'appareil de découpage (45) de tous les côtés, et où le boîtier de protection (29) est installé sur le dispositif de support (22) et peut être déplacé au-dessus de la table de découpe (19) avec le dispositif de support (22), **caractérisé en ce que** le dispositif de découpage (45) est au moins entouré dans la zone d'éjection du jet de découpe par une barrière de protection (47), est fixée au dispositif de découpage (45).

2. Appareil de découpage selon la revendication 1, **caractérisé en ce que** le dispositif de découpage (45) est formé comme un appareil de découpage au laser, plus particulièrement comme un appareil de découpage au laser à fibre.

3. Appareil de découpage selon la revendication 1 ou 2, **caractérisé en ce que** le dispositif de support (22) est déplaçable de façon à ce qu'il puisse être amené, avec le boîtier de protection (29), dans une position située à l'extérieure de la zone de la table de découpe (19).

4. Appareil de découpage selon les revendications 1 à 3, **caractérisé en ce que** la barre de support (23) s'appuie sur des châssis (26) du système de déplacement à ses deux extrémités à l'aide de colonnes de support (24, 25).

5. Appareil de découpage selon l'une des revendications 1 à 4, **caractérisé en ce que** le boîtier de protection (29) s'étend au moins essentiellement sur toute la longueur de la barre de support (23).

6. Appareil de découpage selon l'une des revendications 1 à 5, **caractérisé en ce que** le boîtier de protection (29) est monté de façon à pouvoir être déplacé au moins partiellement relativement à la barre de support (23) entre une position de protection abaissée et une position de montage plus élevée.

7. Appareil de découpage selon la revendication 6, **caractérisé en ce que** la position de protection est ajustable en hauteur.

8. Appareil de découpage selon les revendications 6 ou 7, **caractérisé en ce que** un dispositif d'actionnement motorisé (44) est installé en vue du déplacement du boîtier de protection (29), ou plus particulièrement sa pièce mobile (30).

9. Appareil de découpage selon l'une des revendications 1 à 8, **caractérisé en ce que** le boîtier de protection (29) présente une paroi frontale (30) qui s'étend entre les extrémités de la barre de support (23) et qui est montée de façon à pouvoir être déplacée au moins partiellement relativement à la barre de support (23) entre une position de protection abaissée et une position de montage plus élevée.

10. Appareil de découpage selon la revendication 9, **caractérisé en ce que** la paroi frontale (30) est montée avec ses extrémités latérales de façon à se glisser dans les tronçons avoisinants du boîtier de protection (29).

11. Appareil de découpage selon l'une des revendications 1 à 10, **caractérisé en ce que** le boîtier de protection (29), dans la zone des extrémités de la barre de support (23), est pourvu de parois latérales terminales (38, 39) qui sont reliées du côté frontal par une paroi frontale (30) et à l'arrière par une paroi arrière (31).

12. Appareil de découpage selon les revendications 8 ou 11, **caractérisé en ce que** au moins la surface frontale (30) est pourvue d'une section de paroi inférieure (32) qui s'éloigne d'abord vers le haut en biais de la barre de support (23) et qu'à cette section de paroi inférieure (32) se raccorde une section de paroi supérieure (34) qui s'étend en biais vers. le haut et dans la direction opposée.

13. Appareil de découpage selon les revendications 11 ou 12, **caractérisé en ce que** les pièces des parois latérales terminales (38, 39) sont des colonnes de support (24, 25) sur lesquelles s'appuie la barre de support (23).

14. Appareil de découpage selon les revendications 11 à 13, **caractérisé en ce que** les parois latérales terminales (38, 39) ressortent par en-dessous dans des couvre-joints (40, 41).

15. Appareil de découpage selon l'une des revendications précédentes, **caractérisé en ce que** la barrière de protection (47) peut être ouverte.
